Europäisches Patentamt

European Patent Office

Office européen des brevets

(19)

(11) Numéro de publication : **0 487 485 A2**

(12) **DEMANDE DE BREVET EUROPEEN**

(21) Numéro de dépôt : **91870185.5**

(22) Date de dépôt : **19.11.91**

(51) Int. Cl.⁵ : **C09D 167/00,** C09D 5/03, C08G 18/42, C08G 63/199

(30) Priorité : **21.11.90 US 616552**

(43) Date de publication de la demande :
**27.05.92 Bulletin 92/22**

(84) Etats contractants désignés :
**AT BE CH DE DK ES FR GB GR IT LI LU NL SE**

(71) Demandeur : **U C B, S.A.**
**326, Avenue Louise, Bte 7**
**B-1050 Bruxelles (BE)**

(72) Inventeur : **Kapilow, Lorraine**
**8 Sound Road**
**Rye, New York 10580 (US)**
Inventeur : **Puglisi, Joseph S.**
**Forest Lane**
**Crompond, New York 10517 (US)**
Inventeur : **Cheng, Chi-Wen Frank**
**5 Hallmark Drive**
**New City, New York 10956 (US)**

(74) Mandataire : **Dusseldorp, Raymond et al**
**U.C.B. S.A. Département D.T.B. 326, avenue**
**Louise, Bte 7**
**B-1050 Bruxelles (BE)**

(54) **Compositions de revêtement pulvérulentes résistant aux intempéries.**

(57)    Compositions à base d'un polyester aliphatique terminé par des groupes carboxyle ou par des groupes hydroxyle, obtenu à partir de l'acide 1,4-cyclohexane-dicarboxylique et d'un constituant alcoolique comprenant essentiellement des diols cycloaliphatiques (en particulier le bisphénol A hydrogéné) et des glycols aliphatiques subsidiaires, lesdits polyesters étant éventuellement stabilisés par la présence de composés absorbant la lumière ultraviolette et/ou de stabilisants à la lumière à base d'amines à empêchement stérique. Elles sont utilisées pour la préparation de compositions de revêtement pulvérulentes donnant des enduits de peinture possédant une résistance améliorée aux intempéries.

EP 0 487 485 A2

Des polyesters thermodurcissables utilisables pour la préparation de peintures en poudre sont bien connus. De tels composés sont habituellement préparés à partir d'acides carboxyliques aromatiques difonctionnels et éventuellement d'acides dicarboxyliques aliphatiques, et de diols divers comme par exemple l'éthylène glycol, le diéthylène glycol, le 1,4-butanediol, le néopentyl glycol, etc.. Les polyesters terminés par des groupes carboxyle sont généralement préparés en utilisant un excès de l'acide dicarboxylique par rapport aux diols ou fréquemment par l'introduction d'un anhydride dans une deuxième étape de réaction des groupes OH sur un polyester préformé. De manière analogue, les polyesters terminés par des groupes hydroxyle sont typiquement préparés en utilisant un excès de diol(s) par rapport aux acides dicarboxyliques. Les polyesters décrits ci-dessus se présentent généralement sous une forme amorphe et possèdent une température de transition vitreuse (Tg) d'environ 50 à 80°C

Il existe un grand nombre de brevets décrivant diverses variantes parmi les polyesters mentionnés ci-dessus. Par exemple, dans le brevet américain 4.147.737, on décrit un polyester contenant des groupes carboxyle durcissable avec des composés polyépoxydés, et dans le brevet américain 3.868.338 on décrit des polyesters hydroxylés pour la préparation de peintures en poudre contenant comme co-réactif une quantité substantielle de 2,2,4-triméthyl-pentane-1,3-diol, et qui sont durcis en présence d'une résine de mélamine-formaldéhyde et d'un catalyseur acide bloqué.

Des polyesters qui sont cristallins et qui possèdent une excellente fluidité à la température de fusion du polymère ont également été décrits, par exemple dans les brevets américains 4.387.214 et 4.442.270. Ces polyesters sont formés au départ d'une quantité substantielle d'acide téréphtalique et d'une quantité prépondérante de 1,6-hexanediol en tant qu'alcool dihydroxylé. Des polyesters cristallins, dérivés de l'acide trans-1,4-cyclohexane-dicarboxylique et du 1,4-butanediol, caractérisés par un indice d'hydroxyle de 35 à 160, sont décrits dans le brevet américain 4.352.924.

Des compositions de polyesters stabilisées pour des applications extérieures ont été décrites dans le brevet américain 4.525.504, dans lequel l'acide 1,4-cyclohexane-dicarboxylique, en tant que composant diacide principal, est mis à réagir avec le 2,2,4,4-tétraméthyl-1,3-cyclobutanediol, en tant que composant glycolique majeur, pour former la résine de polyester de base qui est alors stabilisée avec des stabilisants à la lumière à base d'amines à empêchement stérique, en combinaison avec des absorbants conventionnels des radiations ultraviolettes.

Des polyesters utilisables pour des enduits de finition sont décrits dans la demande de brevet européen 211.625. Ils sont basés sur l'emploi d'acides dicarboxyliques alicycliques comme par exemple l'acide 1,4-cyclohexane-dicarboxylique, en association avec des résines epsilon-caprolactone modifiées de poids moléculaire élevé, ces résines étant préparées à partir d'acide téréphtalique en tant que co-réactif typique et de divers glycols.

Finalement, des compositions thermodurcissables à base de polyesters sont décrites dans le brevet américain 4.740.566, dans lequel le polyester est préparé par réaction de 1,4-dicyclohexanedicarboxylate de diméthyle, d'acides dicarboxyliques et d'un glycol à chaîne ramifiée et est ensuite combiné avec un agent de durcissement ou de réticulation du type résine aminoplaste et une résine époxy.

Quoique ces divers systèmes aient fourni des caractéristiques de performance favorables, il subsiste un besoin continu de compositions de polyesters améliorées pour utilisation dans les applications de revêtement en poudre. Les domaines où une amélioration est souhaitée sont la résistance aux intempéries, c'est-à-dire la résistance à la dégradation et la conservation des propriétés physiques après une exposition aux conditions extérieures, une bonne possibilité de mise en oeuvre, une fluidité accrue, une résistance au choc plus élevée, une facilité d'emploi dans les techniques d'application de revêtement en poudre et la présence de caractéristiques physiques appropriées comme par exemple des températures de transition vitreuse pour des applications de revêtement en poudre.

En conséquence, un premier objet de la présente invention est de procurer des compositions à base de polyesters améliorées pour utilisation dans les applications de revêtement en poudre.

Un autre objet est de procurer des compositions qui présentent un perfectionnement particulier en ce qui concerne la résistance aux intempéries, la facilité d'application, l'éventail d'utilisation, la résistance au choc, l'aspect, etc..

D'autres objets et avantages de la présente invention apparaîtront à la lecture de la description qui suit.

Il a maintenant été découvert que les revêtements en poudre à base de polyesters préparés au départ de composants diacide et polyol déterminés présentent un large éventail de performances améliorées. Ainsi donc, ces polyesters aliphatiques terminés par des groupes carboxyle ou par des groupes hydroxyle proviennent de l'acide 1,4-cyclohexane-dicarboxylique et d'un constituant alcoolique comprenant essentiellement des diols aliphatiques, comme par exemple le bisphénol A hydrogéné, éventuellement en combinaison avec un ou plusieurs stabilisants à la lumière. En particulier, l'emploi de diols cycloaliphatiques permet d'obtenir des températures de transition vitreuse plus élevées, une meilleure résistance aux intempéries, une plus grande facilité de mise en oeuvre, etc.. Les systèmes de stabilisants fournissent une résistance supplémentaire aux effets défavorables de la chaleur, de la lumière et de l'oxygène. Par conséquent, les compositions qui en résultent sont capables de résister à une exposition prolongée à des conditions de vieillissement accéléré avec une excellente conservation des propriétés physiques et des caractéristiques, aussi bien que de présenter d'excellentes propriétés de mise en oeuvre, d'application et d'adhérence.

Des avantages supplémentaires procurés par les polyesters terminés par des groupes hydroxyle ou carboxyle sont une grande fluidité et un aspect lisse et ce qui est particulièrement surprenant de la part des deux types de matériaux, c'est la combinaison inattendue de la résistance aux intempéries avec une résistance élevée au choc, donc une souplesse plus grande des revêtements finals.

Selon l'invention, les polyesters aliphatiques contenant des groupes carboxyle ou hydroxyle sont constitués par le produit de la réaction de

(a) un constituant acide représenté par l'acide 1,4-cyclohexane-dicarboxylique, et

(b) un constituant alcoolique qui contient (1) 12 à 100 équivalents % de bisphénol A hydrogéné, d'un autre diol cycloaliphatique ou de leurs mélanges, et (2) 0 à 88 équivalents % d'au moins un glycol ou polyol aliphatique à chaîne linéaire ou ramifiée ayant 2 à 10 atomes de carbone.

En outre, l'invention procure des compositions thermodurcissables résistantes aux intempéries comprenant ces polyesters, un agent de durcissement qui peut réagir avec les groupes carboxyle ou avec les groupes hydroxyle pour réticuler ledit polyester et, éventuellement, des quantités efficaces de stabilisants à la lumière tels que ceux énumérés ci-dessous.

L'acide 1,4-cyclohexane-dicarboxylique utilisé comme constituant acide sera généralement présent sous la forme d'un mélange 1:1 des isomères cis et trans.

Le constituant alcoolique contient 12 à 100, de préférence 30 à 70 équivalents % de bisphénol A hydrogéné et/ou d'un autre diol cycloaliphatique. Des diols cycloaliphatiques caractéristiques comprennent le 2,2,4,4-tétraméthyl-1,3-cyclobutanediol, le 4,8-bis (hydroxyméthyl)tricyclo[5.2.1.0 $^{2,6}$]décane(ou tricyclodécane-diméthanol), le 1,4-cyclohexanediméthanol, le 1,4 cyclohexanediol et leurs mélanges.

Des constituants alcooliques subsidiaires éventuels peuvent être des glycols à chaîne ramifiée, des polyols ayant 2 à 10 atomes de carbone et des triols aliphatiques. En tant qu'exemples de constituants alcooliques subsidiaires on citera l'éthylène glycol, le diéthylène glycol, le propylène glycol, le butylène glycol, le 1,6-hexanediol, le néopentyl glycol, le triméthylolpropane, le triméthyloléthane, le tris(2-hydroxyéthyl)-isocyanurate (ou 1,3,5-tris(2-hydroxyéthyl)-1,3,5-triazine-2,4,6(1H,3H,5H)-trione), etc.. Les mélanges de néopentyl glycol et de triméthylolpropane sont préférés pour atteindre les objectifs de l'invention; le néopentyl glycol facilite l'obtention d'une viscosité à l'état fondu et des températures de transition vitreuse appropriées et le triméthylolpropane fournit une fonctionalité plus grande. Des concentrations appropriées de ces constituants alcooliques subsidiaires sont comprises entre 0 et 88 équivalents % et de préférence entre 20 et 70 équivalents %. Les mélanges de néopentyl glycol et de triméthylolpropane sont généralement utilisés dans un rapport de 50 à 65 équivalents %. La présence de bisphénol A hydrogéné apporte comme avantages une meilleure résistance aux intempéries, la préparation de polyesters solides ayant des températures de transition vitreuse adaptées pour des peintures en poudre et la facilité de la synthèse de résines de polyesters solides amorphes contenant des groupes carboxyle ou hydroxyle.

Les divers acides et glycols énumérés ci-dessus sont disponibles dans le commerce ou peuvent être préparés par des procédés connus en soi.

Les polyesters utilisables selon l'invention sont préparés par des procédés connus de l'état de la technique dans lesquels un acide dicarboxylique est estérifié avec un mélange de glycol(s) et de polyol(s) dans des conditions de température, de pression et de catalyse permettant de former un polymère. Les catalyseurs comprennent l'oxyde de dibutyl-étain, le dilaurate de dibutyl-étain, le trioctanoate de butyl-étain, l'acide sulfurique ou un acide sulfonique. Les températures de réaction sont généralement comprises entre 140 et 225°C.

Les polyesters sont caractérisés par la présence de groupes carboxyle libres provenant de l'utilisation d'un excès du constituant acide par rapport au constituant alcoolique. De tels excès sont supérieurs de 2 à 15 équivalents % à la quantité stoechiométrique pour donner un indice d'acide compris entre 15 et 60 mg de KOH/g. De manière analogue, ils peuvent être caractérisés par la présence de groupes hydroxyle libres résultant de l'utilisation d'un excès des constituants alcooliques par rapport au composant acide. De tels excès sont supérieurs de 2 à 15 équivalents % à la quantité stoechiométrique pour donner un indice d'hydroxyle compris entre 15 et 60 mg de KOH/g. Les viscosités à l'état fondu des polyesters conformes à l'invention sont comprises entre 15 et 100 poises mesurées au viscosimètre ICI à 200°C. Les températures de transition vitreuse (Tg) sont typiquement comprises entre 45 et 70°C.

Selon une caractéristique facultative de l'invention on peut ajouter au mélange réactionnel à l'état fondu, obtenu après estérification, des catalyseurs qui facilitent la réaction du groupe carboxyle pendant le durcissement de la composition de polyester. On peut utiliser divers sels de phosphonium dans ce but et, de manière inattendue, ils contribuent à améliorer certaines caractéristiques de performance de la composition finale du polyester, par exemple sa résistance au choc et sa flexibilité.

Des stabilisants de la couleur sont incorporés dans la composition du polyester pendant la préparation du polyester, tandis que des stabilisants à la lumière peuvent être ajoutés postérieurement dans la formulation du polyester.

Les stabilisants de la couleur qui sont utiles dans l'étape de préparation du polyester sont par exemple des antioxydants phénoliques et divers stabilisants de type phosphite et phosphonite. Pour la formulation du polyester, des composés absorbant la lumière ultraviolette tels que le Tinuvin 900 (Ciba-Geigy Corp.) et des stabilisants à la lumière à base d'amines à empêchement stérique tels que le Tinuvin 144 (Ciba-Geigy Corp.) sont utiles.

Les antioxydants phénoliques employés dans la préparation des polyesters conformes à cette invention sont ceux qui sont typiquement utilisés pour stabiliser les polyoléfines. Il est préférable que l'antioxydant phénolique soit stériquement encombré et relativement non volatil. Comme exemples d'antioxydants phénoliques à empêchement stérique appropriés, on citera la 1,3,5-tris(3,5-di-tert-butyl-4-hydroxybenzyl)-1,3,5-triazine-2,4,6(1H,3H,5H)-trione; le triester de l'acide 3,5-di-tert-butyl-4-hydroxyhydrocinnamique avec la 1,3,5-tris(2-hydroxyéthyl)-1,3,5-triazine-2,4,6(1H,3H,5H)-trione; le 3,5-di-tert-butyl-4-hydroxybenzyl-phosphonate de O,O-di-n-octadécyle; le 3,5-di-tert-butyl-4-hydroxyhydrocinnamate d'octadécyle; le thiodiéthylène bis(3,5-di-tert-butyl-4-hydroxyhydrocinnamate); le N,N'-hexaméthylène-bis(3,5-di-tert-butyl-4-hydroxyhydrocinnamide); le 1,6-hexaméthylène bis(3,5-di-tert-butyl-4-hydroxyhydrocinnamate); le 1,3,5-triméthyl-2,4,6-tris(3,5-di-tert-butyl-4-hydroxybenzyl)benzène; la 2,4-bis(n-octylthio)-6-(4-hydroxy-3,5-di-tert-butylanilino)-1,3,5-triazine; le 3,5-di-tert-butyl-4-hydroxyphénylacétate de n-octadécyle; la 1,3,5-tris(4-tert-butyl-3-hydroxy-2,6-diméthylbenzyl)-1,3,5-triazine-2,4,6(1H,3H,5H)-trione; le 2,2-méthylène-bis(4-éthyl-6-tert-butyl-phénol); le 4,4-méthylène-bis(3,6-di-tert-butylphénol); le 4,4-thiobis(6-tert-butyl-2-méthylphénol); le produit de condensation en 3,1 du 3-méthyl-6-tert-butylphénol avec le crotonaldéhyde; le 4,4-butylidène-bis(6-tert-butyl-m-cresol) 3,5-di-tert-butyl-4-hydroxybenzyl éther; le 2,2-oxamido-bis(3-(3,5-di-tert-butyl-4-hydroxyphényl)-propionate d'éthyle; le ß-(3,5-di-tert-butyl-4-hydroxyphényl)-propionate de stéaryle, le 3-méthyl-4-hydroxy-5-tert-butylbenzyl-malonate de distéaryle; le 4,4'-propylméthylène-bis(2-tert-butyl-5-méthylphénol); le 2,2'-propylméthylène-bis(4,6-diméthylphénol); le 2,2-méthylène-bis(4,6-di-tert-butylphénol); le 1,4-bis(3',5'-di-tert-butyl-4'-hydroxybenzyl)-2,3,5,6-tétraméthylbenzène; le 1,1-bis(3'-cyclohexyl-4'-hydroxyphényl)cyclohexane; le 2,6-bis(2'-hydroxy-3'-tert-butyl-5'-méthylphényl)-4-méthylphénol; la 2,4,6-tris[ß-(3,5-dibutyl-4-hydroxyphényl)éthyl]-1,3,5-triazine; le 2,4,6-tris(3',5'-di-tert-butyl-4'-hydroxybenzyl)phénol, et le tétrakis(3,5-di-tert-butyl-4-hydroxyhydrocinnamate) de pentaérythritol.

Comme exemples de phosphites et de phosphonites on citera le phosphite de triphényle, les phosphites de diphényle et d'alkyle, les phosphites de phényle et de dialkyle, le phosphite de tris(nonylphényle), le phosphite de trilauryle, le phosphite de trioctadécyle, le diphosphite de distéaryle et de pentaérythritol, le phosphite de tris(2,4-di-tert-butylphényle), le diisodécyl-diphosphonite de pentaérythritol, le triphosphite de tristéaryle et de sorbitol, et le 4,4'-biphénylylènediphosphonite de tétrakis(2,4-di-tert-butylphényle).

Les composés absorbant la lumière ultraviolette utiles dans la présente invention sont compatibles avec les polyesters et comprennent des 2-(2'-hydroxyphényl)-benzotriazoles comme par exemple les dérivés 5'-méthyl-, 3',5'-di-tert-butyl-, 5'-tert-butyl-, 5'-(1,1,3,3-tétraméthylbutyl)-, 5-chloro-3',5'-di-tert-butyl-, 5-chloro-3'-tert-butyl-5'-méthyl-, 3'-sec-butyl-5'-tert-butyl-, 4'-octyloxy, 3',5'-di-tert-amyl-et 3',5'-bis(α,α-diméthylbenzyl) du 2-(2'-hydroxyphényl)-benzotriazole; des 2-hydroxy-benzophénones comme par exemple les dérivés 4-hydroxy-, 4-méthoxy-, 4-octyloxy-, 4-décyloxy-, 4-dodécyloxy-, 4-benzyloxy-, 4,2',4'-trihydroxy- et 2'-hydroxy-4,4'-diméthoxy- de la 2-hydroxy-benzophénone, des esters d'acides benzoïques éventuellement substitués comme par exemple, le salicylate de phényle, le salicylate de 4-tert-butyl-phényle, le salicylate de p-tert-octylphényle, le dibenzoylrésorcinol, le bis(4-tert-butylbenzoyl)-résorcinol, le monobenzoate de résorcinol, le 3,5-di-tert-butyl-4-hydroxybenzoate de 2,4-di-tert-butyl-phényle et le 3,5-di-tert-butyl-4-hydroxybenzoate d'hexadécyle, des acrylates comme par exemple l'α-cyano-ß,ß-diphénylacrylate d'éthyle ou d'isooctyle, l'α-carbométhoxycinnamate de méthyle, l'α-cyano-ß-méthyl-p-méthoxy-cinnamate de méthyle ou de butyle, l'α-carbométhoxy-p-méthoxy-cinnamate de méthyle et la N-(ß-carbométhoxy-ß-cyano-vinyl)-2-méthyl-indoline, et des diamides de l'acide oxalique comme par exemple le 4,4'-di-octyloxy-oxanilide, le 2,2'-di-octyloxy-5,5'-di-tert-butyl-oxanilide, le 2-éthoxy-2'-éthyl-oxanilide, la N,N'-bis(3-diméthylaminopropyl)-oxalamide, le 5-tert-butyl-2-éthoxy-2'-éthyloxanilide et son mélange avec le 2-éthoxy-2'-éthyl-5,4'-di-tert-butyloxanilide et les mélanges des oxanilides disubstitués en ortho et en para par le groupe méthoxy ainsi que de ceux disubstitués en ortho et en para par le groupe éthoxy.

Sont particulièrement appréciés dans les présentes compositions les benzotriazoles de poids moléculaire élevé et de faible volatilité comme par exemple le 2-[2-hydroxy-3,5-di(α,α-diméthylbenzyl)-phényl]-2H-benzotriazole, le 2-(2-hydroxy-3,5-di-tert-octylphényl)-2H-benzotriazole, le 2-(2-hydroxy-3-α,α-diméthylbenzyl-5-tert-octylphényl)-2H-benzotriazole, le 2-(2-hydroxy-3-tert-octyl-5-$\alpha,\alpha$-diméthylbenzylphényl)-2H-benzotriazole, le 2-(2-hydroxy-3,5-di-tert-amylphényl)-2H-benzotriazole, le 2-[2-hydroxy-3-tert-butyl-5-[2-[$\omega$-hydroxy-octa-(éthylèneoxy)carbonyl]éthyl]phényl]-2H-benzotriazole, le dodécylate de 2-(2-hydroxy-5-méthylphényl)-2H-benzotriazole ainsi que les composés 5-chlorés correspondant à chacun des benzotriazoles énumérés ci-dessus.

Les benzotriazoles utilisés de préférence dans les présentes compositions sont le 2-[2-hydroxy-3,5-di($\alpha,\alpha$-diméthylbenzyl)phényl]-2H-benzotriazole et le 2-[2-hydroxy-3-tert-butyl-5-[2-[$\omega$-hydroxy-octa(éthylèneoxy)carbonyl]éthyl]phényl]-2H-benzotriazole.

Les stabilisants à la lumière à base d'amines à empêchement stérique qui conviennent dans la présente invention sont basés sur les composés aminés cycliques à empêchement stérique. On citera comme exemple la 1,1'[1,2-éthanediyl]-bis[3,3,5,5-tétraméthylpipérazinone], le polymère du diméthylsuccinate avec le 4-hydroxy-2,2,6,6-tétraméthyl-1-pipéridineéthanol, le sébacate de bis(1,2,2,6,6-pentaméthyl-4-pipéridinyle), le décanedioate de bis(2,2,6,6-tétraméthyl-4-pipéridinyle), le 2-[[3,5-bis(1,1-diméthyléthyl)-4-hydroxyphényl]méthyl]-2-butylpropanedioate de bis(1,2,2,6,6-pentaméthyl-4-pipéridinyle), le poly[[(2,2,6,6-tétraméthyl-4-pipéridinyl)iminométhylène(2,2,6,6-tétraméthyl-4-pipéridinyl)imino[6-(octylamino)-1,3,5-triazine-4,2-diyle]], le benzoate de 2,2,6,6-tétraméthyl-4-pipéridinyle, le tétrakis(2,2,6,6-tétraméthyl-4-pipéridinyloxy)silane, etc..

Une variété de stabilisants à la lumière à base d'amines à empêchement stérique qui conviennent pour les polyesters conformes à cette invention sont disponibles dans le commerce y compris le Tinuvin 292, le Tinuvin 622, le Tinuvin 770 ainsi que le Tinuvin 144, tous fabriqués par Ciba-Geigy Corporation, Ardsley, New York.

Une variété de pigments peuvent être utilisés dans les compositions conformes à cette invention. Comme exemples de pigments utiles on citera les oxydes métalliques tels que le dioxyde de titane, l'oxyde de fer, l'oxyde de zinc, etc., les hydroxydes de métaux, les poudres métalliques, les sulfures, les sulfates, les carbonates, les silicates comme par exemple le silicate d'aluminium, le noir de carbone, le talc, les kaolins, les barytes, les bleus de fer, les bleus de plomb, les rouges organiques, les marrons organiques, etc..

En plus des composants essentiels énumérés ci-dessus, les compositions conformes à la présente invention peuvent aussi contenir des agents régulateurs de fluidité, des huiles siccatives, des agents de dégazage tels que la benzoïne et des charges. Les agents régulateurs de fluidité comprennent par exemple des polymères tels que les polyacrylates et les polyméthacrylates d'alkyles.

Les agents de durcissement et de réticulation appropriés qui peuvent être utilisés avec les présents polyesters sont bien connus dans la technique. Des agents de durcissement typiques comprennent les composés polyépoxydés tels que l'isocyanurate de triglycidyle, les isocyanates bloqués solides, les hydroxyalkylamides, les dérivés de mélamine, les glycoluriles et d'autres agents de durcissement solides capables de réagir avec les fonctions carboxyle et hydroxyle. Les agents de durcissement sont utilisés en des quantités représentant 4 à 20% en poids de la formulation du polyester.

Les composants pulvérulents, c'est-à-dire les résines, les durcisseurs, les charges, les pigments et les additifs, sont préalablement mélangés dans un mélangeur approprié (par exemple un mélangeur à tambour). Le prémélange est homogénéisé à des températures élevées dans un broyeur à deux cylindres ou dans une extrudeuse. Le mélange homogénéisé est ensuite refroidi, concassé, broyé et tamisé

La composition en poudre peut être déposée sur le substrat au moyen d'un pistolet pulvérisateur selon la technique de dépôt électrostatique ou suivant la technique de dépôt en lit fluidisé ou par toute autre méthode bien connue de dépôt de poudre. Après l'enduction, la poudre est chauffée à une température suffisante pour provoquer l'étalement et la fusion de ses particules pour former un revêtement lisse, uniforme, continu et sans craquelures sur la surface du substrat.

Les exemples suivants illustrent davantage diverses formes de réalisation de la présente invention.

Exemple 1

Préparation d'un polyester contenant des groupes carboxyle.

Dans un ballon de deux litres à quatre cols équipé d'un agitateur, d'une colonne de distillation reliée à un condenseur refroidi à l'eau, d'un tube d'admission d'azote et d'un thermomètre connecté à un thermorégulateur, on place 360,5 g (3,0 éq) de bisphénol A hydrogéné, 156 g (3,0 éq) de néopentyl glycol, 25,8 g (0,57 éq) de triméthylolpropane et 674 g (7,1 éq) d'acide 1,4-cyclohexane-dicarboxylique pur à 91% avec 3,03 g de trioctanoate de butyl-étain comme catalyseur, 0,6 g de phosphite de triphényle et 1,2 g de tétrakis(3,5-di-tert-butyl-4-hydroxyhydrocinnamate) de pentaérythritol (Irganox 1010) comme stabilisants. On chauffe le mélange en atmosphère d'azote et sous agitation jusqu'à une température d'environ 135°C et on distille l'eau formée. On augmente graduellement le chauffage jusqu'à atteindre une température de 220°C sous une pression réduite à environ 65 mm Hg. La température finale atteinte est de 225°C et la résine est déversée après refroidissement à 210°C et retour à la pression normale.

La résine obtenue possède les caractéristiques suivantes:

```
indice d'acide (mg de KOH/g)        52
indice d'hydroxyle (mg de KOH/g)     6,2
viscosité ICI à 200°C (poise)       56
Tg (°C)*                            55,7
```

   *   Tg déterminée par calorimétrie à balayage différentiel (ou DSC).

### Exemple 2

Le polyester préparé à l'exemple 1 est formulé en une composition de revêtement en poudre en mélangeant les constituants indiqués au tableau I dans un broyeur à deux cylindres, à une température de 71°C pendant 10 minutes. On broie la matière dans un broyeur à disques dentés et on tamise pour obtenir des particules dont la dimension n'excède pas 106 micromètres. La poudre est appliquée au moyen d'un procédé de pulvérisation électrostatique sur des panneaux en acier laminé à froid, non traités. Les propriétés physiques de la composition de revêtement en poudre ont été déterminées après durcissement à 200°C pendant 20 minutes pour une épaisseur de couche de 51 ± 5 micromètres. Les résultats sont donnés dans le tableau I.

Le polyester de comparaison est un polyester à groupes carboxyle disponible dans le commerce, qui est remarquable pour ses caractéristiques de performance avantageuses en exposition à l'extérieur.

Les mesures de résistance aux intempéries ont été effectuées dans un environnement très sévère, c'est-à-dire au moyen d'un appareil QUV de mesure du vieillissement accéléré (de la Q Panel Co) dans lequel on soumet les échantillons enduits à des effets intermittents de condensation aussi bien qu'à des effets de détérioration dus à la lumière simulés par des lampes UV fluorescentes (lampes FS-40). Les résultats obtenus à ce test sont indiqués au tableau II (brillant à 60°) et au tableau III (conservation du brillant en %).

### TABLEAU I

#### Formulations à base du polyester à groupes carboxyle

| Formulation (% en poids) | A | B | C | D | E |
|---|---|---|---|---|---|
| polyester de comparaison (a) | - | - | - | 65 | - |
| polyester de l'exemple 1 | 63 | 63 | 81,5 | - | 63 |
| isocyanurate de triglycidyle | 7 | 7 | 9,0 | 5 | 7 |
| dioxyde de titane | 28,5 | 19,9 | - | 28,5 | 17,6 |
| Tinuvin 144 (b) | - | 3 | 3 | - | 3 |
| Tinuvin 900 (c) | - | 5 | 5 | - | 5 |
| agent régulateur de fluidité (d) | 1,5 | 1,5 | 1,5 | 1,5 | 1,5 |
| catalyseur XB3126 (e) | - | 0,6 | - | - | 3 |
| **Propriétés de l'enduit** | | | | | |
| couleur - L (f) | 95 | 90 | 18 | 96 | 94 |
|       - a | -5 | -5 | 3 | -8 | -8 |
|       - b | 2 | 2 | -1 | 2 | 3 |
| brillant à 60°(g) | 84 | 85 | 119 | 86 | 84 |
| brillant à 20° | 52 | 53 | 93 | 36 | - |
| netteté de l'image (h) | 13 | 41 | 61 | 7 | 5 |
| adhérence | excel. | excel. | excel. | excel. | excel. |
| dureté au crayon | H | H | H | H | H |
| frottements à la méthyl éthyl cétone | 200+ | 200+ | 200+ | 200+ | 200+ |
| pliage au mandrin conique de 3mm (i) | fissuré | fissuré | fissuré | passe | passe |
| choc inverse (j) (kg. cm) | <10 | <10 | <10 | 160+ | 80 |
| temps de gélification à 200°C (sec) | 210 | 193 | 300+ | 50 | 34 |
| EPV à 176°C (mm) (k) | 34 | 55 | 150 | 60 | 51 |

(a) Arakote 3003, polyester à base d'acide aromatique (Ciba-Geigy Corp.).
(b) Stabilisant à la lumière à base d'amine à empêchement stérique (Ciba-Geigy Corp.).

(c) Absorbant de lumière ultraviolette (Ciba-Geigy Corp.).

(d) Modaflown II un polymère acrylique à bas poids moléculaire (Monsanto Chemical Co.).

(e) Catalyseur à base d'un sel d'ammonium quaternaire (Ciba-Geigy Corp.).

(f) Mesurée au "Color Gloss Multigloss Bykometer (BYK-Chemie).

(g) ASTM D 523.

(h) ASTM E-430-78.

(i) ASTM D 522.

(j) ASTM D 2794.

(k) Méthode d'essai 298 Ciba-Geigy (Ecoulement sur plaque de verre, en abrégé EPV).

## TABLEAU II

### Variation du brillant à 60° en fonction du temps

#### Formulations

| Heures | A | B | C | D |
|--------|-----|-----|-----|-----|
| 0 | 86 | 87 | 108 | 94 |
| 100 | 87 | 87 | 111 | 95 |
| 200 | 86 | 87 | 110 | 93 |
| 300 | 87 | 88 | 107 | 78 |
| 400 | 84 | 88 | 107 | 40 |
| 500 | 81 | 88 | 103 | 26 |
| 600 | 77 | 88 | 105 | 24 |
| 700 | 71 | 90 | 102 | 30 |
| 800 | 68 | 90 | 106 | 23 |
| 900 | 60 | 89 | 105 | 24 |
| 1000 | 51 | 89 | 103 | 23 |
| 1100 | 51 | 87 | 101 | - |
| 1200 | 47 | 89 | 104 | - |
| 1300 | 48 | 84 | 100 | - |
| 1400 | 48 | 80 | 98 | - |
| 1500 | 46 | 78 | 97 | - |
| 1600 | 46 | 79 | 96 | - |
| 1700 | 40 | 72 | 93 | - |

## TABLEAU III

### Conservation du brillant (en %) en fonction du temps

| Heures | Formulations | | | |
| --- | --- | --- | --- | --- |
| | A | B | C | D |
| 100 | 100 | 100 | 100 | 100 |
| 200 | 100 | 100 | 100 | 99 |
| 300 | 100 | 100 | 99 | 83 |
| 400 | 98 | 100 | 99 | 43 |
| 500 | 94 | 100 | 95 | 28 |
| 600 | 89 | 100 | 97 | 26 |
| 700 | 83 | 100 | 94 | 32 |
| 800 | 79 | 100 | 98 | 24 |
| 900 | 70 | 100 | 97 | 26 |
| 1000 | 59 | 100 | 95 | 24 |
| 1100 | 59 | 100 | 94 | - |
| 1200 | 55 | 100 | 96 | - |
| 1300 | 56 | 97 | 93 | - |
| 1400 | 56 | 92 | 91 | - |
| 1500 | 53 | 90 | 90 | - |
| 1600 | 53 | 91 | 89 | - |
| 1700 | 47 | 83 | 86 | - |
| 3800 | - | 50 | 73 | - |
| 4600 | - | - | 69 | - |
| 5400 | - | - | 50 | - |

Les résultats montrent que les compositions de revêtement en poudre conformes à l'invention présentent certaines caractéristiques de performance semblables à celles d'une composition du commerce. Cependant, on voit, d'après les résultats obtenus au test d'exposition dans l'appareil QUV de mesure du vieillissement, que la formulation A non stabilisée conserve 50% de son brillant initial après 1700 heures, les formulations B et C conservent entre 83 et 86% de leur brillant initial après 1700 heures et même au-delà, tandis que la formulation D (comparative) ne conserve seulement que 43% de son brillant initial après 400 heures d'exposition.

Par conséquent, les polyesters aliphatiques durcis avec l'isocyanurate de triglycidyle, avec ou sans stabilisants, présentent une résistance inattendue au vieillissement accéléré rencontré dans le test QUV.

Exemple 3

Une série d'autres polyesters ont été préparés selon le procédé décrit à l'exemple 1.

## Polyesters aliphatiques à groupes carboxyle

Constituants
(grammes (équivalents))

| | 2 | 3 | 4 | 5 | 6 |
|---|---|---|---|---|---|
| acide 1,4-cyclohexane-dicarboxylique | 626,1(7,1) | 626,1(7,1) | 626,1(7,1) | 783(8,3) | 626,1(7,1) |
| néopentyl glycol | 78,0(1,5) | 156,0(3,0) | 156,0(3,0) | 201,3(3,9) | 156,0(3,0) |
| bisphénol A hydrogéné | 360,5(3,0) | 360,5(3,0) | 180,3(1,5) | - | - |
| 1,4-cyclohexane-diméthanol | 108,0(1,5) | - | 108,0(1,5) | - | - |
| 2,2,4,4-tétraméthyl-1,3-cyclobutanediol | - | - | - | 236,4(3,3) | - |
| triméthylolpropane | 25,8(0,6) | - | 25,8(0,6) | 25,8(0,6) | 25,8(0,6) |
| tricyclodécane-diméthanol | - | - | - | - | 294,5(3,0) |
| tris(2-hydroxyéthyl)-isocyanurate | - | 49,9(0,6) | - | - | - |
| Irganox 1010 | 0,6 | 0,6 | 0,6 | 0,6 | 0,6 |
| trioctanoate de butyl-étain | 3,0 | 3,0 | 3,0 | 2,0 | 2,0 |

Propriétés physiques

| | 2 | 3 | 4 | 5 | 6 |
|---|---|---|---|---|---|
| indice d'acide (mg de KOH/g) | 52,9 | 46,9 | 41,5 | 42,2 | 38,7 |
| Tg(°C;DSC) | 61,3 | 63,3 | 51,6 | 51,4 | 52,8 |
| viscosité ICI à 200°C(poise) | 47 | 46,3 | 50 | 56,3 | 44,5 |

EP 0 487 485 A2

## Polyesters aliphatiques à groupes carboxyle

Constituants
(grammes (équivalents))

| | 7 | 8 | 9 | 10 | 11 | 12 |
|---|---|---|---|---|---|---|
| acide 1,4-cyclohexane-dicarboxylique (98%) | 626 (7,14) | 626 (7,14) | 626 (7,14) | 574 (6,55) | 626 (7,14) | 626 (7,14) |
| néopentyl glycol | 78,0 (1,5) | 156 (3,0) | 156 (3,0) | 156 (3,0) | 156 (3,0) | 156 (3,0) |
| bisphénol A hydrogéné | 180,3 (1,5) | 180,3 (1,5) | - | 180,3 (1,5) | 360,5 (3,0) | 360,5 (3,0) |
| 1,4-cyclohexane-diméthanol | 216 (3,0) | 108 (1,5) | - | 108 (1,5) | - | - |
| triméthylolpropane | - | - | 25,8 (0,57) | 15,0 (0,29) | 25,8 (0,57) | 25,8 (0,57) |
| tris(2-hydroxyéthyl)-isocyanurate | 49,9 (0,57) | 49,9 (0,57) | - | - | - | - |
| 1,4-cyclohexanediol | - | - | 174 (3,0) | - | - | - |
| Irganox 1010 | 0,6 | 0,6 | 1,2 | 0,6 | 1,2 | 3,5 |
| phosphite de triphényle | - | - | 0,6 | 0,6 | - | 0,6 |
| tris-2-éthylhexanoate de butyl-étain | 3,0 | 3,0 | 3,0 | 3,0 | 3,0 | 3,0 |
| **Propriétés physiques** | | | | | | |
| indice d'acide (mg de KOH/g) | 50 | 44 | 54 | 32 | 51,6 | 53,6 |
| Tg(°C;DSC) | 58 | 55 | 51 | 51,3 | 58 | 63,7 |
| viscosité ICI à 200°C (poise) | 62,5 | 51 | 59,5 | 62,5 | 50 | 50,3 |

EP 0 487 485 A2

Polyesters aliphatiques à groupes carboxyle

Constituants
(grammes (équivalents))

| | 13 | 14 | 15 | 16 | 17 |
|---|---|---|---|---|---|
| acide 1,4-cyclohexane-dicarboxylique (98%) | 574 (6,55) | 626 (7,14) | 574 (6,55) | 574 (6,55) | 574 (6,55) |
| néopentyl glycol | 156 (3,0) | 156 (3,0) | 156 (3,0) | 156 (3,0) | 156 (3,0) |
| bisphénol A hydrogéné | 180,3 (1,50) | 360,5 (3,00) | 180,3 1,50) | 180,3 (1,50) | 180,3 (1,50) |
| 1,4-cyclohexane-diméthanol | 108 (1,50) | - | 108 (1,50) | 108 (1,50) | 108 (1,50) |
| triméthylolpropane | 15,0 (0,29) | 25,8 (0,574) | - | - | - |
| tris(2-hydroxyéthyl)-isocyanurate | - | - | 25,1 (0,289) | 25,1 (0,289) | 25,1 (0,289) |
| Irganox 1010 | 0,6 | 1,2 | 0,6 | 0,6 | 0,6 |
| phosphite de triphényle | 0,6 | 0,6 | 0,6 | 0,6 | 0,6 |
| tris-2-éthylhexanoate de butyl-étain | 3,0 | 3,0 | 3,0 | 3,0 | 3,0 |
| sel de phosphonium (catalyseur) | 3,63 | 4,23 | - | 2,76 | 3,60 |

Propriétés physiques

| | 13 | 14 | 15 | 16 | 17 |
|---|---|---|---|---|---|
| indice d'acide (mg de KOH/g) | 28,2 | 52,8 | 32,2 | 32,2 | 32,2 |
| Tg(°C;DSC) | 54,5 | 63,8 | 50,2 | 50,2 | 58 |
| viscosité ICI à 200°C (poise) | 60 | 55,5 | 60 | 60 | 60 |

## TABLEAU IV

### Formulations transparentes ou colorées à base de TGIC

| Formulation (% en poids) | F | G |
|---|---|---|
| polyester 5 | 61,8 | 88,3 |
| isocyanurate de triglycidyle | 8,2 | 11,7 |
| dioxyde de titane | 20,5 | - |
| agent régulateur de fluidité | 1,5 | 1,5 |
| Tinuvin 144 | 1,0 | - |
| Tinuvin 900 | 5,0 | - |
| conditions de durcissement | 20 minutes à 200°C | |

### Propriétés de l'enduit

| | F | G |
|---|---|---|
| couleur L | 92,8 | 26,8 |
| a | -3,1 | 7,2 |
| b | 3,0 | -3,9 |
| brillant à 60° | 86 | 105 |
| brillant à 20° | 61 | 74 |
| netteté de l'image | 41 | 86 |
| adhérence | excel. | excel. |
| dureté au crayon | 3H | 4H |
| pliage au mandrin conique de 3 mm | passe | passe |
| frottements à la méthyl éthyl cétone | 200+ | 200+ |
| choc inverse (kg.cm) | 160 | 160 |
| temps de gélification à 200°C (sec) | 214 | 187 |
| EPV (mm) | 60 | 100+ |

## TABLEAU V

### Formulations à base de TGIC dans un rapport 93/7 et 90/10

| Formulation (% en poids) | H | I |
|---|---|---|
| polyester 13 | 65,0 | - |
| polyester 14 | - | 63,0 |
| isocyanurate de triglycidyle | 5,0 | 7,0 |
| dioxyde de titane | 28,5 | 28,5 |
| agent régulateur de fluidité | 1,5 | 1,5 |
| conditions de durcissement | 20 minutes à 200°C | |

TABLEAU V (suite)

Propriétés de l'enduit

| | | |
|---|---|---|
| couleur L | 94,6 | 94,2 |
| a | -0,29 | -1,07 |
| b | 0,04 | 1,8 |
| brillant à 60° | 85 | 86 |
| brillant à 20° | 52 | 61 |
| netteté de l'image | 16 | 21 |
| adhérence | excel. | excel. |
| dureté au crayon | H | H |
| pliage au mandrin conique de 3 mm | passe | passe |
| frottements à la méthyl éthyl cétone | 150 | 200+ |
| choc inverse (kg.cm) | 160 | 160 |
| temps de gélification à 200°C (sec) | 30 | 31 |

TABLEAU VI

Formulations à base de TGIC ayant une

netteté d'image et une résistance au choc élevées

| Formulation (% en poids) | J | K | L |
|---|---|---|---|
| polyester 15 | 65,0 | - | - |
| polyester 16 | - | 65,0 | - |
| polyester 17 | - | - | 65,0 |
| isocyanurate de triglycidyle | 5,0 | 5,0 | 5,0 |
| dioxyde de titane | 28,5 | 28,5 | 28,5 |
| agent régulateur de fluidité | 1,5 | 1,5 | 1,5 |
| conditions de durcissement | 20 minutes à 200°C | | |
| Propriétés de l'enduit | | | |
| couleur L | 94,6 | 94,3 | 94,4 |
| a | 0,11 | -0,46 | -0,61 |
| b | 0,4 | -0,11 | 0,06 |
| brillant à 60° | 86 | 85 | 86 |
| brillant à 20° | 70 | 60 | 62 |
| netteté de l'image | 60 | 22 | 21 |
| adhérence | excel. | excel. | excel. |
| dureté au crayon | H | H | H |
| pliage au mandrin conique | fissuré à 12,7 mm | passe à 3 mm | passe à 3 mm |

TABLEAU VI (suite)

frottements à la méthyl éthyl cétone <10    200+    200+

choc inverse (kg.cm)    <10    160    160

temps de gélification à 200°C (sec)    >300    71    40

Ces résultats démontrent soit la netteté élevée de l'image, soit la haute résistance au choc de ces formulations à base de polyesters aliphatiques à groupes carboxyle et d'isocyanurate de triglycidyle comme agent de durcissement.

Exemple 4. Préparation de polyesters contenant des groupes hydroxyle.

On procède comme à l'exemple 1 mais en utilisant les constituants suivants :

| Constituants (grammes(équivalents)) | Polyesters aliphatiques à groupes hydroxyle | | | | |
|---|---|---|---|---|---|
| | 18 | 19 | 20 | 21 | 22 |
| acide 1,4-cyclohexane-dicarboxylique (98%) | 577 (6,57) | 577 (6,57) | 571 (6,5) | 571 (6,5) | 580,6 (6,74) |
| néopentyl glycol | 209 (4,02) | 194,7 (3,74) | 205 (3,94) | 205 (3,94) | 205 (3,94) |
| bisphénol A hydrogéné | 313,5 (2,61) | 351 (2,93) | 337,3 (2,75) | - | - |
| triméthylolpropane | 31 (0,69) | 20 (0,444) | 27,1 (0,522) | 11,0 (0,244) | - |
| tricyclodécane-diméthanol | - | - | - | 277,4 (2,83) | 275,5 (2,81) |
| tris(2-hydroxyéthyl)-isocyanurate | - | - | - | - | 67,7 (0,778) |
| Irganox 1010 | 0,6 | 0,6 | 0,6 | 0,6 | 0,6 |
| tris-2-éthylhexanoate de butyl-étain | 3,0 | 3,0 | 3,0 | 3,0 | 3,0 |
| Propriétés physiques | | | | | |
| indice d'acide (mg de KOH/g) | 6,5 | 6,0 | 5,5 | 2,30 | 2,0 |
| indice d'hydroxyle (mg de KOH/g) | 32,8 | 34 | 33,5 | 17,8 | 30,4 |
| Tg (°C;DSC) | 56 | 61 | 55 | 47,6 | 48,3 |
| viscosité ICI à 200°C (poise) | 85,8 | 61 | 63,8 | 65 | 60 |

Exemple 5

L'utilisation du procédé de l'exemple 2 permet d'obtenir les résultats suivants :

## TABLEAU VII

### Formulation à base d'un polyester aliphatique à groupes hydroxyle à haute résistance au choc

| Formulation (% en poids) | M |
|---|---|
| polyester 22 | 60,9 |
| isophorone diisocyanate bloqué au caprolactame | 9,1 |
| dioxyde de titane | 28,1 |
| agent régulateur de fluidité | 1,5 |
| dilaurate de dibutyl-étain | 0,4 |
| conditions de durcissement | 20 minutes à 200°C |
| **Propriétés de l'enduit** | |
| couleur L | 93,4 |
| a | -0,23 |
| b | 0,09 |
| brillant à 60° | 94 |
| brillant à 20° | 82 |
| netteté de l'image | 41 |
| adhérence | excel. |
| dureté au crayon | 2H |
| pliage au mandrin conique de 3 mm | passe |
| frottements à la méthyl éthyl cétone | 80 |
| choc inverse (kg. cm) | 160 |
| temps de gélification à 200°C (sec) | 123 |

Ces résultats montrent les excellentes propriétés mécaniques obtenues avec la formulation M à base d'un polyester aliphatique terminé par des groupes hydroxyle.

## Revendications

1. Résine de polyester aliphatique contenant des groupes carboxyle libres ou des groupes hydroxyle libres, caractérisée en ce qu'elle est constituée par le produit de la réaction de

   (a) un constituant acide représenté par l'acide 1,4-cyclohexane dicarboxylique, et

   (b) un constituant alcoolique, qui contient (1) 12 à 100 équivalents % de bisphénol A hydrogéné, d'un autre diol cycloaliphatique ou de leurs mélanges, et (2) 0 à 88 équivalents % d'au moins un glycol ou polyol aliphatique à channe linéaire ou ramifiée ayant 2 à 10 atomes de carbone.

2. Résine de polyester selon la revendication 1, caractérisée en ce que le constituant alcoolique (1) est choisi dans le groupe consistant en le bisphénol A hydrogéné, le 2,2,4,4-tétraméthyl-1,3-cyclobutanediol, le 4,8-bis(hydroxyméthyl)tricyclo[5.2.1.0$^{2,6}$]décane, le 1,4-cyclohexane-diméthanol, le 1,4-cyclohexanediol et leurs mélanges.

3. Résine de polyester selon la revendication 1 ou 2, caractérisée en ce que le constituant alcoolique (1) est le bisphénol A hydrogéné.

4. Résine de polyester selon l'une quelconque des revendications 1 à 3, caractérisée en ce que le constituant alcoolique (2) est choisi parmi l'éthylène glycol, le diéthylène glycol, le propylène glycol, le butylène glycol, le 1,6-hexanediol, le néopentyl glycol, le triméthylolpropane, le triméthyloléthane, le tris(2-hydroxyéthyl)-isocyanurate et leurs mélanges.

5. Résine de polyester selon la revendication 4, caractérisée en ce que le constituant (2) est un mélange de néopentyl glycol et de triméthylolpropane.

6. Résine de polyester selon l'une quelconque des revendications 1 à 5, caractérisée en ce que le constituant (1) est le bisphénol A hydrogéné et le constituant (2) est un mélange de néopentyl glycol et de triméthylolpropane.

7. Résine de polyester selon l'une quelconque des revendications 1 à 6, caractérisée en ce que le polyester contenant des groupes carboxyle libres résulte de l'utilisation d'un excès de 2 à 15 équivalents % du constituant (a) par rapport à la quantité stoechiométrique du constituant (b).

8. Résine de polyester selon l'une quelconque des revendications 1 à 7, caractérisée en ce que le polyester a un indice d'acide ou un indice d'hydroxyle compris entre 15 et 60 mg de KOH/g et une viscosité à l'état fondu comprise entre 15 et 100 poises mesurée à 200°C

9. Résine de polyester selon l'une quelconque des revendications 1 à 8, caractérisée en ce que sa température de transition vitreuse est comprise entre 45 et 70°C.

10. Résine de polyester selon l'une quelconque des revendications 1 à 6, 8 et 9, caractérisée en ce que le polyester contenant des groupes hydroxyle libres résulte de l'utilisation d'un excès de 2 à 15 équivalents % du constituant (b) par rapport à la quantité stoechiométrique du constituant (a).

11. Composition thermodurcissable résistante aux intempéries, caractérisée en ce qu'elle contient :
    (a) une résine de polyester selon l'une quelconque des revendications 1 à 10,
    (b) un agent de durcissement qui peut réagir avec les groupes carboxyle ou avec les groupes hydroxyle pour réticuler ledit polyester, et
    (c) éventuellement une quantité efficace d'au moins un stabilisant choisi parmi les composés absorbant la lumière ultraviolette et les stabilisants à la lumière à base d'amines à empêchement stérique.

12. Composition selon la revendication 11, caractérisée en ce que ledit polyester contient des groupes carboxyle libres.

13. Composition selon la revendication 11 ou 12, caractérisée en ce que l'agent de durcissement est un composé polyépoxydé.

14. Composition selon la revendication 13, caractérisée en ce que l'agent de durcissement est l'isocyanurate de triglycidyle.

15. Composition selon l'une quelconque des revendications 11 à 14, caractérisée en ce qu'elle contient en outre un catalyseur de réticulation; tel qu'un sel de phosphonium, qui facilite la réaction du groupe carboxyle pendant le durcissement du polyester.

16. Composition selon la revendication 11, caractérisée en ce que ledit polyester contient des groupes hydroxyle libres.

17. Composition selon la revendication 11 ou 16, caractérisée en ce que l'agent de durcissement est un isocyanate aliphatique.

18. Composition selon l'une quelconque des revendications 11 à 17, caractérisée en ce que le stabilisant à la lumière est choisi parmi les benzotriazoles, les benzophénones, les esters d'acides benzoïques, les acrylates, les diamides de l'acide oxalique, les amines à empêchement stérique et leurs mélanges.

19. Composition selon la revendication 18, caractérisée en ce que le stabilisant à la lumière est un mélange de benzotriazoles et d'amines à empêchement stérique.